# EUROPEAN PATENT SPECIFICATION

(11) **EP 4 017 161 B1**
(45) Date of publication and mention of the grant of the patent: **02.04.2025**
(21) Application number: 19941026.7
(22) Date of filing: 14.08.2019
(51) Int. Cl.: H04W 74/0833

(54) **TERMINAL AND COMMUNICATION METHOD**
ENDGERÄT UND KOMMUNIKATIONSVERFAHREN
TERMINAL ET PROCÉDÉ DE COMMUNICATION

(43) Date of publication of application: 22.06.2022
(73) Proprietor: NTT DOCOMO, INC., Chiyoda-Ku Tokyo 100-6150 (JP)
(72) Inventor: TAKAHASHI, Hideaki, Tokyo 100-6150 (JP); WANG, Lihui, Beijing, 100190 (CN)
(74) Representative: Hoffmann Eitle
(86) International application number: PCT/JP2019/031981
(87) International publication number: WO 2021/029049

(56) References cited:
- EP-A1- 3 874 794
- EP-A1- 3 879 883
- EP-A1- 3 967 102
- US-A1- 2018 139 787
- US-A1- 2018 205 516
- ZTE ET AL: "Considerations on 2-Step RACH Procedures", 3GPP DRAFT; R1-1901627, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 February 2019 (2019-02-16), pages 1 - 11, XP051599324
- ERICSSON: "Selection of 2-step or 4-step RA", vol. RAN WG2, no. Reno, Nevada, US ;20190513 - 20190517, 13 May 2019 (2019-05-13), XP051730408, Retrieved from the Internet <URL:http://www.3gpp.org/ftp/Meetings%5F3GPP%5FSYNC/RAN2/Docs/R2%2D1906957%2Ezip> [retrieved on 20190513]
- FUJITSU: "On procedure selection among 2-step and 4-step RACH", vol. RAN WG2, no. Reno, USA; 20190513 - 20190517, 13 May 2019 (2019-05-13), XP051729726, Retrieved from the Internet <URL:http://www.3gpp.org/ftp/Meetings%5F3GPP%5FSYNC/RAN2/Docs/R2%2D1906256%2Ezip> [retrieved on 20190513]
- VIVO: "Considerations on the 2-step RACH procedure", vol. RAN WG2, no. Xi'an, China; 20190408 - 20190412, 6 April 2019 (2019-04-06), XP051700434, Retrieved from the Internet <URL:http://www.3gpp.org/ftp/Meetings%5F3GPP%5FSYNC/RAN2/Docs/R2%2D1903077%2Ezip> [retrieved on 20190406]
- SAMSUNG: "Procedure for Two-step RACH", 3GPP TSG RAN WG1 #97 RL-1906906, 3 May 2019 (2019-05-03), XP051708941
- "Random Access Resource selection procedure for 2-step RACH", 3GPP TSG RAN WG2 #106 R2-1907925, 3 May 2019 (2019-05-03), XP051712181

## Description

### TECHNICAL FIELD

The present invention relates to a terminal and a communication method in a radio communication system.

### BACKGROUND ART

In NR (New Radio) (also referred to as "5G") as a successor system of LTE (Long Term Evolution), providing greater network capacity, higher data transmission speeds, reduced latency, simultaneous connections of more terminals, lower cost, and improved power efficiency are being studied (for example, non-patent document 1).

In an NR system, similar to LTE, a random access is performed for synchronization establishment and scheduling requests between a terminal and a base station. There are two types of random access procedures, contention based random access (CBRA) procedure and contention free random access (CFRA) procedure (for example, non-patent document 2).

### [Prior Art Document]

### [Non-Patent Document]

[Non-Patent Document 1] 3GPP TS 38.300 V15.6.0 (2019-06)
[Non-Patent Document 2] 3GPP TS 38.321 V15.6.0 (2019-06)

EP 3 874 794 A1, cited under Art. 54(3) EPC, relates to a method for a user equipment (UE) for performing a random access (RA) procedure. The method receives, at the UE, an RA configuration and a reference signal received power (RSRP) threshold. The method then determines whether a detected RSRP exceeds the RSRP threshold once the RA procedure is initiated. If the detected RSRP exceeds the RSRP threshold, the method performs a two-step RA procedure.

EP 3 879 883 A1, cited under Art. 54(3) EPC, relates to a random access process selecting method and apparatus, a chip, and a computer program. The method comprises: when a system is configured with a first random access process and a second random access process simultaneously, a terminal device selects to initiate a random access by means of the first random access process or the second random access process on the basis of a predetermined condition.

EP 3 967 102 A1, cited under Art. 54(3) EPC, relates to a user equipment (UE) receiving a configuration message from a base station for supporting random access channel (RACH) type selection by the UE. The configuration message may include one or more reference signals and one or more link quality thresholds corresponding to the one or more reference signals. The UE may generate measurements of the reference signals and determine link quality for communications between the UE and the base station based on the measurements.

US 2018/205516 A1relates to a method to perform contention based random access. The method includes receiving an indication from a network entity whether a cell in the carrier frequency supports a 2-step random access procedure. When the 2-step random access procedure is supported in the cell, a random access procedure is selected between the 2-step random access procedure and a 4-step random access procedure.

ZTE ET AL: "Considerations on 2-Step RACH Procedures", 3GPP DRAFT; R1-1901627 relates to a 2-step RACH procedure. The main topics of 2-step RACH procedure consists of the procedure of msgA, msgB, power control, fall back mechanism (to 4-step RACH), and other related procedure issues.

ERICSSON: "Selection of 2-step or 4-step RA", 3GPP DRAFT; R2-1906957 relates to how a UE should select between doing a 2-step or 4-step Random access procedure.

FUJITSU: "On procedure selection among 2-step and 4-step RACH", 3GPP DRAFT; R2-1906256 relates to a selection procedure among 2-step and 4-step RACH.

VIVO: "Considerations on the 2-step RACH procedure", 3GPP DRAFT; R2-1903077 relates to considerations on the 2-step RACH procedure in 3GPP TSG-RAN WG2 Meeting #105bis.

### SUMMARY OF INVENTION

### [PROBLEM TO BE SOLVED BY THE INVENTION]

In the contention based random access procedure of an NR radio communication system, in addition to a conventional four-step random access procedure, a two-step random access procedure using MsgA and MsgB is being considered. The terminal and the base station must determine which one of the two-step random access procedure and the four-step random access procedure is to be performed.

In light of the above aspect, the present invention aims to control the random access procedure depending on radio quality.

### [MEANS FOR SOLVING THE PROBLEM] [0007]

The object of the invention is achieved by the subject-matter of the independent claims. Further examples are provided for facilitating the understanding of the invention. The following paragraphs may describe embodiments, aspects and examples that are not specifically claimed, but may be useful for understanding the invention.

According to a technique disclosed herein, there is provided a terminal, comprising: a transmission unit that transmits a first message to a base station, the first message including a random access preamble for a two-step random access procedure or for a four-step random access procedure; a reception unit that receives a second message as a response to the first message from the base station; and a control unit that, if radio quality in communication with the base station satisfies a first condition, performs the two-step random access procedure, and, if the radio quality in communication with the base station does not satisfy the first condition, performs the four-step random access procedure.

### [ADVANTAGE OF THE INVENTION]

According to the disclosed technique, the random access procedure can be controlled depending on radio quality.

### BRIEF DESCRIPTION OF DRAWINGS

FIG. 1 is a diagram for illustrating a radio communication system according to an embodiment of the present invention;
FIG. 2 is a sequence diagram for illustrating an exemplary random access procedure (1);
FIG. 3 is a sequence diagram for illustrating an exemplary random access procedure (2);
FIG. 4 is a sequence diagram for illustrating an exemplary four-step random access procedure;
FIG. 5 is a sequence diagram for illustrating an exemplary two-step random access procedure;
FIG. 6 is a flowchart for illustrating an exemplary random access procedure according to an embodiment of the present invention;
FIG. 7 is a flowchart for illustrating an exemplary random access procedure according to the present invention;
FIG. 8 is a diagram for illustrating one exemplary functional arrangement of a base station 10 according to the present invention;
FIG. 9 is a diagram for illustrating one exemplary functional arrangement of a terminal 20 according to an embodiment of the present invention; and
FIG. 10 is a diagram for illustrating one exemplary hardware arrangement of the base station 10 or the terminal 20 according to the present invention.

### EMBODIMENTS OF THE INVENTION

Hereinafter, embodiments of the present invention will be described with reference to the drawings. The embodiments described below are merely examples, and embodiments to which the present invention is applied are not limited to the following embodiments.

In operations of a radio communication system of an embodiment of the present invention, conventional techniques are used as needed. Note that the conventional techniques may be conventional LTE, for example, but are not limited to the conventional LTE. Also, unless specifically stated otherwise, it should be appreciated that the terminology "LTE" used herein has a broader meaning including LTE-Advanced and its subsequent schemes (e.g., NR).

Also, in embodiments of the present invention as described below, the terms "SS (Synchronization Signal)", "PSS (Primary SS)", "SSS (Secondary SS)", "PBCH (Physical Broadcast Channel)", "PRACH (Physical Random Access Channel)" or the like used in existing LTE are used. This is due to convenience of recitations, and a signal, a function or the like similar to them may be referred to as other wordings. Also, the above terminologies correspond to "NR-SS", "NR-PSS", "NR-SSS", "NR-PBCH", "NR-PRACH", respectively, in the NR. Note that even if the signals are used in the NR, they may not be explicitly described as "NR-".

Also, in embodiments of the present invention, duplexing schemes such as TDD (Time Division Duplexing) scheme, FDD (Frequency Division Duplexing) scheme or other schemes (e.g., flexible duplex scheme or the like) may be used.

Also, in embodiments of the present invention, "configuring" a radio parameter or the like may mean that a predetermined value is pre-configured or that a radio parameter indicated from the base station 10 or the terminal 20 is configured.

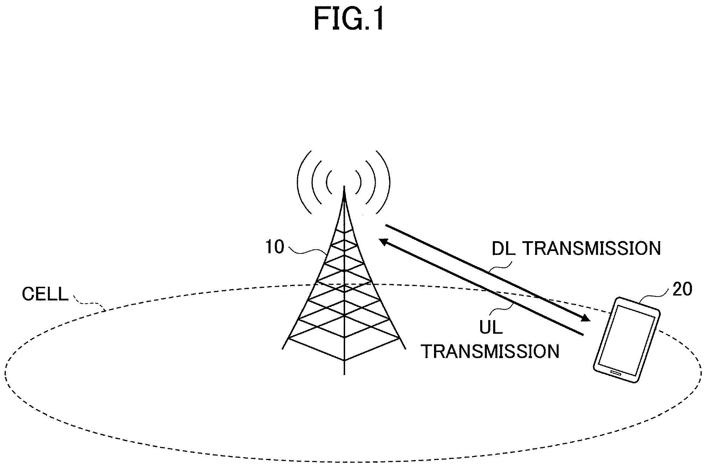

FIG. 1 is a diagram for illustrating a radio communication system according to an embodiment of the present invention. As illustrated in FIG. 1, the radio communication system according to the embodiment of the present invention includes the base station 10 and the terminal 20. In FIG. 1, a single base station 10 and a single terminal 20 are illustrated, but the illustrated embodiment is merely one example, and a plurality of the base stations 10 and a plurality of the terminals 20 may be provided.

The base station 10 is a communication device that serves one or more cells and wirelessly communicates to the terminal 20. A physical resource for a radio signal is defined with a time domain and a frequency domain. The time domain may be defined by the number of OFDM symbols, and the frequency domain may be defined by the number of subcarriers or the number of resource blocks. The base station 10 transmits a synchronization signal and system information to the terminal 20. The synchronization signal may be an NR-PSS and an NR-SSS, for example. The system information may be transmitted in an NR-PBCH, for example, and may be also referred to as broadcast information. As illustrated in FIG. 1, the base station 10 transmits a control signal or data to the terminal 20 in downlinks (DLs) and receives a control signal or data from the terminal 20 in uplinks (ULs). Any of the base station 10 and the terminal 20 can perform beamforming to transmit and receive signals. Also, any of the base station 10 and the terminal 20 can apply MIMO (Multiple Input Multiple Output) communication to the DLs and ULs. Also, any of the base station 10 and the terminal 20 may communicate via a SCell (Secondary Cell) and a PCell (Primary Cell) in CA (Carrier Aggregation).

The terminal 20 is a communication device having a radio communication function such as a smartphone, a portable telephone, a tablet, a wearable terminal, a M2M (Machine-to-Machine) communication module or the like. As illustrated in FIG. 1, the terminal 20 receives a control signal or data from the base station 10 in DLs and transmits a control signal or data to the base station 10 in ULs to use various communication services provided by the radio communication system.

In a random access procedure performed for synchronization establishment and scheduling between the terminal 20 and the base station 10, for example, the terminal 20 transmits a random access preamble or a UE (User Equipment) identifier as an UL signal to the base station 10, and the base station 10 transmits a random access response and information for contention resolution as a DL signal to the terminal 20.

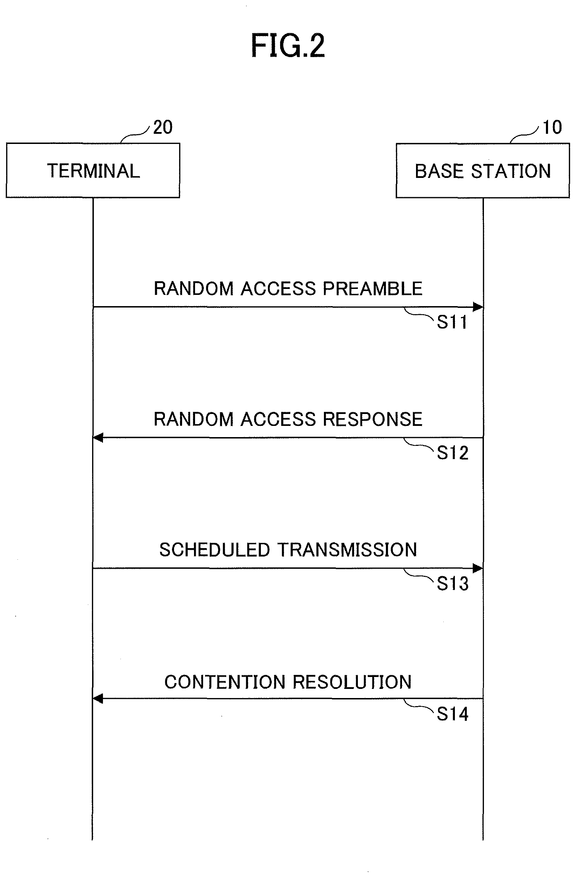

FIG. 2 is a sequence diagram illustrating an exemplary random access procedure (1). The example of the random access procedure illustrated in FIG. 2 is a contention based random access procedure. Upon starting the contention based random access procedure, at step S11, the terminal 20 transmits a random access preamble to the base station 10. Then, the base station 10 transmits a random access response to the terminal 20 (S12). Then, the terminal 20 performs transmission to the base station 10 scheduled with the random access response (S13). In the scheduled transmission, information for identifying the terminal 20 is transmitted. Then, the base station 10 transmits information for contention resolution to the terminal 20 (S14). If the contention resolution is successful, the random access procedure successfully ends.

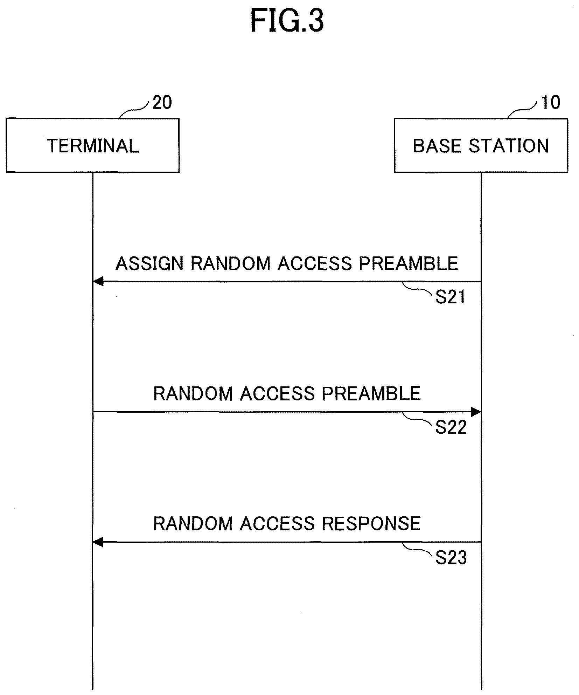

FIG. 3 is a sequence diagram for illustrating an example random access procedure (2). The example of the random access procedure illustrated in FIG. 3 is the contention free random access procedure. Upon starting the contention free random access procedure, at step S21, the base station 10 assigns a random access preamble to the terminal 20. Then, the terminal 20 transmits the assigned random access preamble to the base station 10 (S22). Then, at step S23, the base station 10 transmits a random access response to the terminal 20.

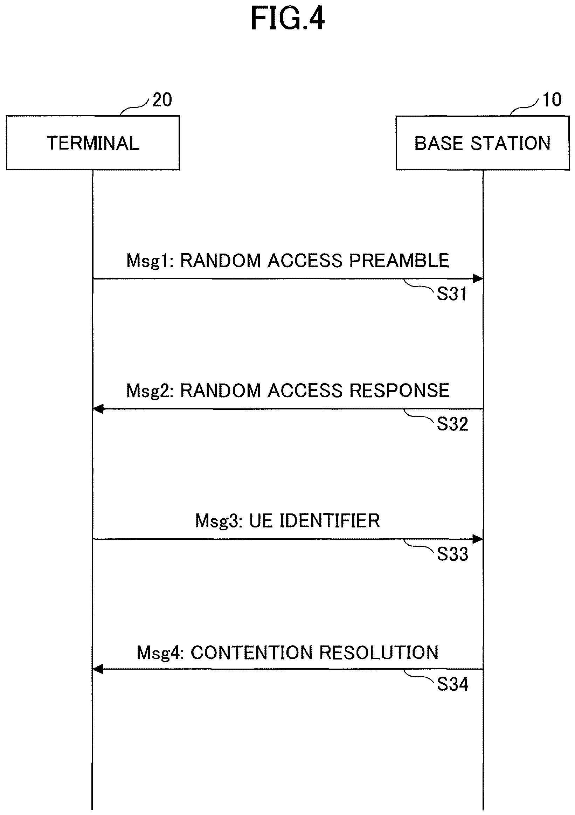

FIG. 4 is a sequence diagram for illustrating an exemplary four-step random access procedure. The example of the random access procedure illustrated in FIG. 4 is the contention based random access procedure similar to FIG. 2 and the four-step random access procedure. At step S31, the terminal 20 transmits a random access preamble as Msg1 to the base station 10. Then, the base station 10 transmits a random access response as Msg2 to the terminal 20 (S32). Then, the terminal 20 transmits a UE identifier as Msg3 to the base station 10 (S33). Then, the base station 10 transmits information for contention resolution as Msg4 to the terminal 20 (S34). If the contention resolution is successful, the random access procedure successfully ends.

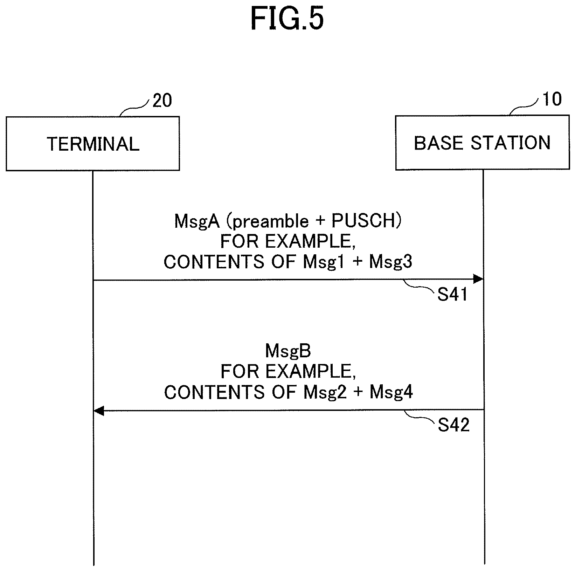

FIG. 5 is a sequence diagram for illustrating an exemplary two-step random access procedure. The example of the random access procedure illustrated in FIG. 5 is the contention based random access procedure and the two-step random access procedure. The two-step random access procedure is discussed for completion of the random access procedure in a short period. At step S41, the terminal 20 transmits a random access preamble or a PUSCH (Physical Uplink Shared Channel) as MsgA to the base station 10. For example, contents corresponding to Msg1 and Msg3 for the four-step random access procedure may be transmitted via the PUSCH. Then, the base station 10 transmits MsgB to the terminal 20 (S42). For example, MsgB may include contents corresponding to Msg2 and Msg4 for the four-step random access procedure. If the contention resolution is successful, the random access procedure successfully ends. According to usage of the two-step random access procedure, effects such as low latency and reduced power consumption can be expected.

Here, the random access preamble for the four-step random access procedure is classified into two groups A and B. Group B is used to indicate an available size of Msg3 to the base station 10. In the case of configuring the random access preamble group B, if the size of Msg3 is larger than a predetermined threshold and the pathloss is smaller than a predetermined threshold, the random access preamble group B is used.

Selection as to whether to perform the two-step random access procedure may be indicated to all the terminals 20 via a SIB (System Information Block) or as an individual configuration for the terminal 20 in the case of an RRC state being RRC_CONNECTED, RRC_INACTIVE or RRC_IDLE. On the other hand, it has not been conventionally defined whether the two-step random access procedure is performed based on radio quality.

Also, in the two-step random access procedure, a plurality of configurations for the PUSCH associated with MsgA may be supported. However, the maximum number of configurations, which of parameters are made common, how to indicate different configurations, whether PUSCH resources associated with different MsgAs overlap with each other in temporal and frequency domains or the like have not been conventionally defined. It is assumed that for indicating different configurations, different ROs (RACH Occasions), different preamble groups or different UCI (Uplink Control Information) are used, for example.

In order to associate a PRACH resource for the two-step random access procedure with a PRACH resource for the four-step random access procedure, a network may separate the RO configured for the two-step random access procedure from the RO configured for the four-step random access procedure, for example. Also, the network may share the RO configured for the two-step random access procedure with the RO configured for the four-step random access procedure and separate the preamble for the two-step random access procedure from the preamble for the four-step random access procedure.

As stated above, it has not been conventionally defined whether to perform the two-step random access procedure based on radio quality. In addition, the scheme for selecting the two-step random access procedure or the four-step random access procedure based on the radio quality has not been conventionally defined.

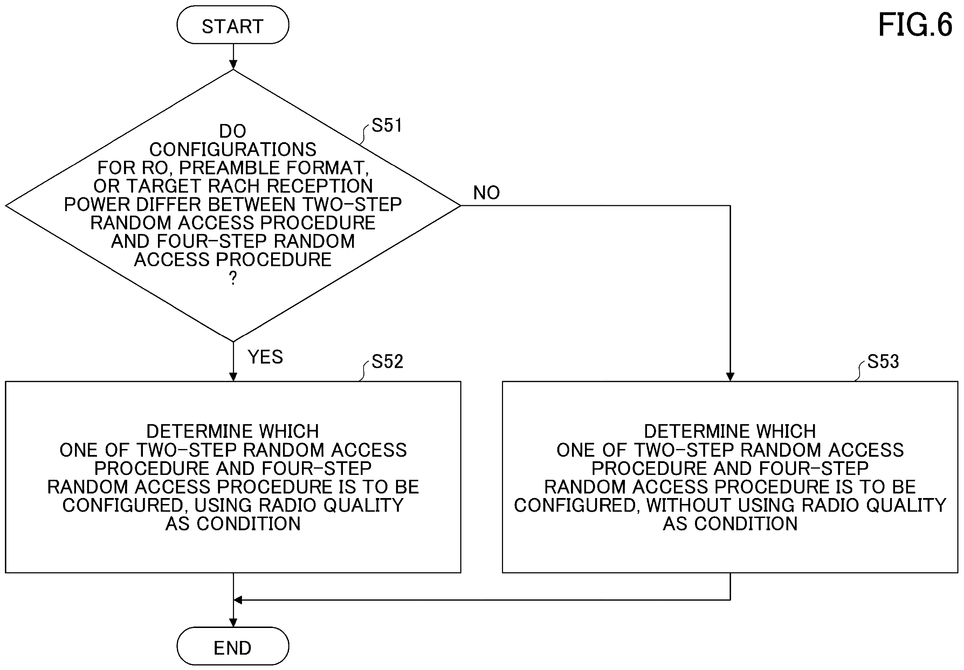

FIG. 6 is a flowchart for illustrating an exemplary random access procedure according to an embodiment of the present invention. As illustrated in FIG. 6, the base station 10 may be able to configure one condition for selecting the two-step random access procedure or the four-step random access procedure based on the radio quality.

At step S51, the terminal 20 determines whether configurations for the RO, the preamble format or the target RACH reception power indicated from the base station 10 are different between the two-step random access procedure and the four-step random access procedure. If the configurations are different (YES at S51), the flow proceeds to step S52, and if the configurations are the same (YES at S52), the flow proceeds to step S53.

At step S52, the terminal 20 uses the radio quality as the condition to determine whether to configure the two-step random access procedure or the four-step random access procedure. If the configurations for the RO, the preamble format or the target RACH reception power are different between the two-step random access procedure and the four-step random access procedure, the radio quality may be the condition for selecting the two-step random access procedure or the four-step random access procedure because of different performance between the preamble used for the two-step random access procedure and the preamble used for the four-step random access procedure.

On the other hand, at step S53, the terminal 20 determines whether to configure the two-step random access procedure or the four-step random access procedure without use of the radio quality as the condition. If the configurations for the RO, the preamble format or the target RACH reception power are the same between the two-step random access procedure and the four-step random access procedure, the radio quality may not be used as the condition for selecting the two-step random access procedure or the four-step random access procedure because of the same performance between the preamble used for the two-step random access procedure and the preamble used for the four-step random access procedure. Upon detecting only the preamble, the base station 10 switches the two-step random access procedure into the four-step random access procedure and transmits the random access response (Msg2).

The condition associated with the radio quality at step S52 may be defined as 1) to 3) below.
1) The radio quality may be defined by means of an RSRP (Reference Signal Received Power), an RSRQ (Reference Signal Received Quality) or an SINR (Signal to Interference plus Noise power Ratio). For example, a threshold such as an rsrp-Threshold2RACH may be configured. If the RSRP, the RSRQ or the SINR is larger than the threshold, the two-step random access procedure may be selected, and if the RSRP, the RSRQ or the SINR is smaller than or equal to the threshold, the four-step random access procedure may be selected. A reference signal for measuring the RSRP, the RSRQ or the SINR may be a SSB (Synchronization Signal Block) for the contention based random access. The reference signal for measuring the RSRP, the RSRQ or the SINR may be the SSB or a CSI-RS (Channel State Information Reference Signal) for the contention free random access. The upper layer may configure whether to select the two-step random access procedure or the four-step random access procedure.
2) If a pathloss is smaller than a threshold, the two-step random access procedure may be selected. If the pathloss is smaller than a P_{CMAX}-msgApusChReceivedTargetPower - (msgApusch-DeltaPreamble), the two-step random access procedure may be selected. If the pathloss is larger than or equal to a P_{CMAX}-msgApuschReceivedTargetPower - (msgApusch-DeltaPreamble), the four-step random access procedure may be selected.

The P_{CMAX} is the maximum transmit power for a cell in which the random access procedure is performed. The msgApuschReceivedTargetPower is a target reception power for the PUSCH configured for the two-step random access procedure and may be denoted as puschReceivedTargetPower. The msgApusch-DeltaPreamble is a newly introduced parameter and may be referred to as other names. The msgApusch-DeltaPreamble is an offset to the target reception power configured for the two-step random access procedure.

A formula "msgApuschReceivedTargetPower = msgAprembleReceivedTargetPower + delta_msgAPUSCH" may be defined. The delta_msgAPUSCH is a relative offset to the target reception power for the PUSCH configured for the two-step random access procedure. The delta_msgAPUSCH is not configured, parameter delta_preamble_msg3 for the four-step random access procedure may be used instead of the delta_msgAPUSCH. Note that the msgApreambleReceivedTargetPower is the target reception power for the preamble configured for the two-step random access procedure and may be denoted as a preambleReceivedTargetPower.

3) If the pathloss is smaller than the threshold, the two-step random access procedure may be selected. If the pathloss is smaller than the P_{CMAX}-msgApreambleReceivedTargetPower - (msgApusch-DeltaPreamble), the two-step random access procedure may be selected. If the pathloss is larger than or equal to a P_{CMAX}-msgApreambleReceivedTargetPower - (msgApusch-DeltaPreamble), the four-step random access procedure may be selected.

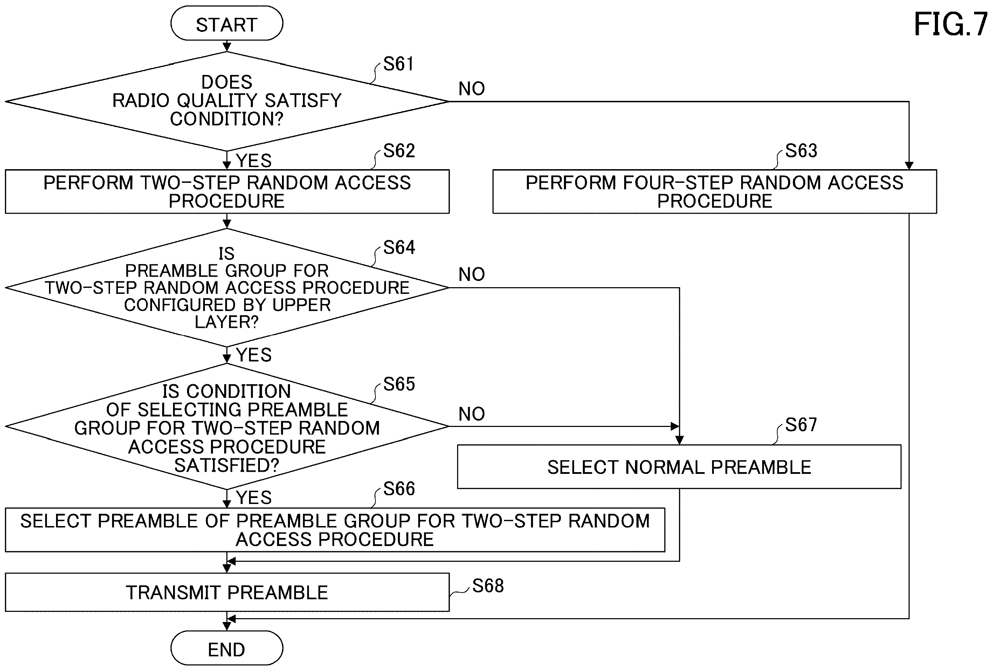

FIG. 7 is a flowchart for illustrating an exemplary random access procedure according to the present invention. As illustrated in FIG. 7, a preamble group may be divided in the two-step random access procedure with reference to the radio quality.

At step S61, the terminal 20 determines whether the radio quality satisfies the condition illustrated in FIG. 6. If the radio quality satisfies the condition (YES at S61), the flow proceeds to step S62, and if the radio quality does not satisfy the condition (NO at S61), the flow proceeds to step S63. At step S62, the terminal 20 performs the two-step random access procedure and proceeds to step S64. On the other hand, at step S63, the terminal 20 performs the four-step random access procedure and terminates the flow.

At step S64, the terminal 20 determines whether the preamble group for the two-step random access procedure is configured from an upper layer. If the preamble group is configured (YES at S64), the flow proceeds to step S65, and if the preamble group is not configured (NO at S64), the flow proceeds to step S67. Note that the preamble group used for the two-step random access procedure may be defined as "group C".

At step S65, the terminal 20 determines whether to satisfy a condition for selecting a preamble in the preamble group for the two-step random access procedure. The condition for selecting the preamble in the preamble group for the two-step random access procedure may be defined as 1) to 3) below based on the radio quality such as a pathloss, for example.
1) If the PUSCH size of MsgA is larger than ra-MsgAPuschSizeGroupA and the pathloss is smaller than P_{CMAX}-msgApuschReceivedTargetPower - (msgApusch-DeltaPreamble) - messagePowerOffsetGroupC, the preamble in the preamble group for the two-step random access procedure is selected. The messagePowerOffsetGroupC is an offset value corresponding to the preamble group C.

Note that if the preamble specific to the two-step random access procedure is not configured, the preamble group A and the preamble group B used for the four-step random access procedure may be used. Also, the RO used for the two-step random access procedure and the RO used for the four-step random access procedure may be separated for distinction between the two-step random access procedure and the four-step random access procedure.

Note that the preamble group for the two-step random access procedure that is not used for the four-step random access procedure may be configured such as the above group C. The RO may be shared or separated between the two-step random access procedure and the four-step random access procedure. By configuring different preamble groups, the two-step random access procedure and the four-step random access procedure can be differentiated.

2) If the PUSCH size of MsgA is larger than ra-MsgAPuschSizeGroupA and the pathloss is smaller than P_{CMAX}-msgApreambleReceivedTargetPower - (msgApusch-DeltaPreamble) - messagePowerOffsetGroupC, the preamble in the preamble group for the two-step random access procedure is selected.

3) The preamble in the preamble group for the two-step random access procedure may be selected with the conditions of a) to d) below or combinations of the conditions, in addition to the radio quality.
a) MCS and/or TBS for MsgAPUSCH
b) Spatial filter (beam) for MsgAPUSCH
c) Resource of temporal domain and/or frequency domain for MsgAPUSCH
d) Purpose of the two-step random access procedure (for example, a BFR (Beam Failure Recovery), UL synchronization, SI requests and so on)

At step S65, if the preamble in the preamble group for the two-step random access procedure is used as stated above (YES at S65), the flow proceeds to step S66, and if the preamble in the preamble group for the two-step random access procedure is not used (NO at S65), the flow proceeds to step S67.

At step S66, the terminal 20 selects the preamble in the preamble group for the two-step random access procedure. The preamble group for the two-step random access procedure may be group C, for example. On the other hand, at step S67, the terminal 20 selects a normal preamble. The normal preamble may be the preamble included in group A, for example. At step S68, the terminal 20 transmits the selected preamble.

According to the above-stated embodiments, the terminal 20 can select the two-step random access procedure or the four-step random access procedure based on the radio quality. Also, the terminal 20 can select the preamble group for the two-step random access procedure based on the condition including the radio quality.

In other words, the random access procedure can be controlled depending on the radio quality.

### (Device Arrangement)

Next, exemplary functional arrangements of the base station 10 and the terminal 20 that perform operations and actions as stated above are described. The base station 10 and the terminal 20 include functions of implementing the above-stated embodiments. Note that the base station 10 and the terminal 20 each may have only a portion of the functions of the embodiments.

### <Base station 10>

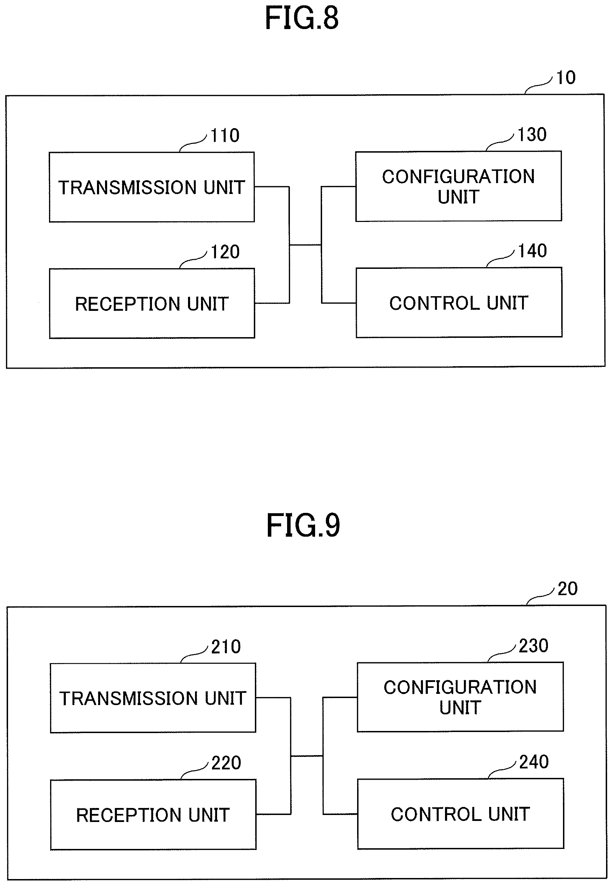

FIG. 8 illustrates an exemplary functional arrangement of the base station 10. As shown in FIG. 8, the base station 10 includes a transmission unit 110, a reception unit 120, a configuration unit 130 and a control unit 140. The functional arrangement shown in FIG. 8 is only one example. The functional separation and the names of the functional units may be arbitrary as long as operations according to the present embodiment can be achieved.

The transmission unit 110 includes a function of generating a signal for transmission to the side of the terminal 20 and wirelessly transmitting the signal. The reception unit 120 includes a function of receiving various signals transmitted from the terminal 20 and acquiring information for upper layers from the received signals, for example. Also, the transmission unit 110 includes a function of transmitting an NR-PSS, an NR-SSS, an NR-PBCH, a DL/UL control signal, a DL/UL data signal or the like to the terminal 20.

The configuration unit 130 stores preconfigured configurations and various configurations for transmission to the terminal 20 in a memory device and reads them from the memory device as needed. Contents of the configurations may be configurations associated with random access or the like, for example.

The control unit 140 performs the two-step random access procedure or the four-step random access procedure as stated in conjunction with the embodiments. The functional portions of the control unit 140 related to signal transmission may be included in the transmission unit 110, and the functional portions of the control unit 140 related to signal reception may be included in the reception unit 120.

### <Terminal 20>

FIG. 9 is a diagram for illustrating one exemplary functional arrangement of the terminal 20. As illustrated in FIG. 9, the terminal 20 has a transmission unit 210, a reception unit 220, a configuration unit 230 and a control unit 240. The functional arrangement shown in FIG. 9 is only one example. The functional separation and the names of the functional units may be arbitrary as long as operations according to the present embodiment can be achieved.

The transmission unit 210 generates a transmission signal from transmission data and wirelessly transmits the transmission signal. The reception unit 220 wirelessly receives various signals and acquires signals for upper layers from the received physical layer signals. Also, the reception unit 220 has a function of receiving an NR-PSS, an NR-SSS, an NR-PBCH, a DL/UL/SL control signal and so on transmitted from the base station 10. Also, for example, as D2D communication, the transmission unit 210 transmits a PSCCH (Physical Sidelink Control Channel), a PSSCH (Physical Sidelink Shared Channel), a PSDCH (Physical Sidelink Discovery Channel), a PSBCH (Physical Sidelink Broadcast Channel) or the like to other terminals 20, and the reception unit 120 receives the PSCCH, the PSSCH, the PSDCH, the PSBCH or the like from other terminals 20.

The configuration unit 230 stores various configurations received at the reception unit 220 from the base station 10 or the terminal 20 in a memory device and reads them from the memory device as needed. Also, the configuration unit 230 stores preconfigured configurations. Contents of the configurations may be configurations associated with random access and so on, for example.

The control unit 240 performs the two-step random access procedure or the four-step random access procedure with the base station 10 as stated above. The functional portion of the control unit 240 regarding signal transmission may be included in the transmission unit 210, and the functional portion of the control unit 240 regarding signal reception may be included in the reception unit 220.

### (Hardware arrangement)

The block diagrams (FIGS. 8 and 9) used for the description of the above embodiments show blocks of functional units. These functional blocks (components) are implemented by any combination of at least one of hardware and software. In addition, the implementation method of each function block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

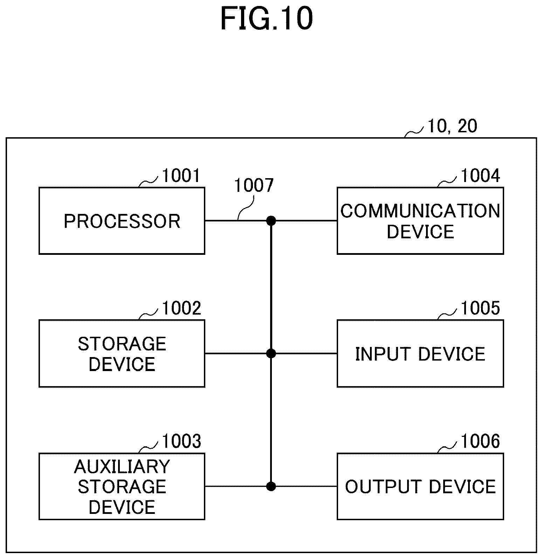

For example, each of the base station 10, the terminal 20 and so on according to one embodiment of the present invention may function as a computer performing operations for a radio communication method according to this embodiment. FIG. 10 is a diagram illustrating an example of the hardware configuration of the base station 10 and the terminal 20 according to the present disclosure. The base station 10 and the terminal 20 as stated above may be physically configured as a computer device including a processor 1001, a storage device 1002, a auxiliary storage device 1003, a communication device 1004, an input device 1005, an output device 1006, a bus 1007, etc.

In the following description, the term "device" can be read as a circuit, a device, a unit, etc. The hardware configuration of the base station 10 and the terminal 20 may be configured to include one or more of the respective devices shown in the figure, or may be configured without some devices.

Each function of the base station 10 and the terminal 20 is implemented by loading predetermined software (program) on hardware, such as the processor 1001 and the storage device 1002, so that the processor 1001 performs computation and controls communication by the communication device 1004, and at least one of reading and writing of data in the storage device 1002 and the auxiliary storage device 1003.

The processor 1001, for example, operates an operating system to control the entire computer. The processor 1001 may be configured with a central processing unit (CPU: Central Processing Unit) including an interface with a peripheral device, a control device, a processing device, a register, etc. For example, the above-stated control units 140 and 240 or the like may be implemented with the processor 1001.

Additionally, the processor 1001 reads a program (program code), a software module, data, etc., from at least one of the auxiliary storage device 1003 and the communication device 1004 to the storage device 1002, and executes various processes according to these. As the program, a program is used which causes a computer to execute at least a part of the operations described in the above-described embodiment. For example, the control unit 140 of the base station 10 shown in FIG. 8 may be implemented by a control program that is stored in the storage device 1002 and that is operated by the processor 1001. Also, for example, the control unit 240 of the terminal 20 shown in FIG. 9 may be implemented by a control program that is stored in the storage device 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The storage device 1002 is a computer readable storage medium, and, for example, the storage device 1002 may be formed of at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory (main storage device), etc. The storage device 1002 may store a program (program code), a software module, etc., which can be executed for implementing the radio communication method according to one embodiment of the present disclosure.

The auxiliary storage device 1003 is a computer readable storage medium and may be formed of, for example, at least one of an optical disk, such as a CD-ROM (Compact Disc ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, etc. The auxiliary storage device 1003 may be referred to as an auxiliary storage device. The above-described storage medium may be, for example, a database including at least one of the storage device 1002 and the auxiliary storage device 1003, a server, or any other suitable medium.

The communication device 1004 is hardware (transmitting and receiving device) for performing communication between computers through at least one of a wired network or a wireless network, and is also referred to, for example, as a network device, a network controller, a network card, a communication module, etc. The communication device 1004 may be configured to include, for example, a high frequency switch, a duplexer, a filter, a frequency synthesizer, etc., to implement at least one of frequency division duplexing (FDD) or time division duplexing (TDD). For example, a transceiver antenna, an amplification unit, a transceiver unit, a channel interface or the like may be implemented with the communication device 1004. The transceiver unit may be implemented by the transmission unit and the reception unit that are physically or logically separated.

The input device 1005 is an input device (e.g., a keyboard, a mouse, a microphone, a switch, a button, a sensor, etc.) that receives an external input. The output device 1006 is an output device (e.g., a display, speaker, LED lamp, etc.) that performs output toward outside. The input device 1005 and the output device 1006 may be configured to be integrated (e.g., a touch panel) .

Each device, such as processor 1001 and storage device 1002, is also connected by the bus 1007 for communicating information. The bus 1007 may be formed of a single bus or may be formed of different buses between devices.

Also, the base station 10 and the terminal 20 may include hardware, such as a microprocessor, a digital signal processor (DSP: Digital Signal Processor), an ASIC (Application Specific Integrated Circuit), a PLD (Programmable Logic Device), and a FPGA (Field Programmable Gate Array), which may implement some or all of each functional block. For example, the processor 1001 may be implemented using at least one of these hardware components.

### (Conclusion of the embodiments)

As stated above, according to an embodiment of the present invention, there is provided a terminal, comprising: a transmission unit that transmits a first message to a base station, the first message including a random access preamble for a two-step random access procedure or a four-step random access procedure; a reception unit that receives a second message as a response to the first message from the base station; and a control unit that if radio quality in communication with the base station satisfies a first condition, performs the two-step random access procedure and if the radio quality in communication with the base station does not satisfy the first condition, performs the four-step random access procedure.

According to the above arrangement, the terminal 20 can make selection as to which one of the two-step random access procedure and the four-step random access procedure is to be performed. In other words, the random access procedure can be controlled depending on the radio quality.

If configurations for a random access occasion, a preamble format or a target random access reception power differ between the two-step random access procedure and the four-step random access procedure, the control unit may determine which one of the two-step random access procedure and the four-step random access procedure to be performed, based on the first condition. According to the arrangement, the terminal 20 determines which one of them is to be performed, based on the radio quality, only when the configurations for the two-step random access procedure and the four-step random access procedure differ.

The first condition may be that a pathloss in communication with the base station is smaller than a value obtained by subtracting: a target reception power for a physical uplink shared channel configured for the two-step random access procedure; and an offset to a target reception power configured for the two-step random access procedure, from a maximum transmit power for a cell in which the random access procedure is performed. According to the arrangement, the terminal 20 can make selection as to which one of the two-step random access procedure and the four-step random access procedure is to be performed, based on the radio quality.

If the radio quality in communication with the base station satisfies a second condition, the control unit may select a preamble in a preamble group for the two-step random access procedure. According to the arrangement, the terminal 20 can select a preamble group for the two-step random access procedure based on a condition including the radio quality.

The second condition may be that a pathloss in communication with the base station is smaller than a value obtained by subtracting: a target reception power for a physical uplink shared channel configured for the two-step random access procedure; an offset to a target reception power configured for the two-step random access procedure; and an offset corresponding to a preamble group for the two-step random access procedure, from a maximum transmit power for a cell in which the random access procedure is performed. According to the arrangement, the terminal 20 can select a preamble group for the two-step random access procedure based on a condition including the radio quality.

Also, according to an embodiment of the present invention, there is provided a communication method implemented by a terminal, comprising: a transmission procedure of transmitting a first message to a base station, the first message including a random access preamble for a two-step random access procedure or for a four-step random access procedure; a reception procedure of receiving a second message as a response to the first message from the base station; and a control procedure of, if radio quality in communication with the base station satisfies a first condition, performing the two-step random access procedure, and, if the radio quality in communication with the base station does not satisfy the first condition, performing the four-step random access procedure.

According to the above arrangement, the terminal 20 can make selection as to which one of the two-step random access procedure and the four-step random access procedure is to be performed, based on the radio quality. In other words, the random access procedure can be controlled depending on the radio quality.

### (Supplemental embodiments)

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (a MIB (Master Information Block) and a SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. However, the other network node may be a combination of a plurality of other network nodes (for example, an MME and a S-GW).

Information, signals, or the like described in the present disclosure may be output from an upper layer (or a lower layer) to a lower layer (or an upper layer). Information, signals, or the like described in the present disclosure may be input and output via a plurality of network nodes.

Information or the like that has been input or output may be stored at a predetermined location (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Also, software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Also, information, parameters, and the like described in the present disclosure may be expressed by absolute values, may be expressed by relative values with respect to predetermined values, and may be expressed by corresponding different information. For example, radio resources may be indicated by indices.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells. In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication device, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device), V2X (Vehicle-to-Everything), or the like). In this case, a user equipment 20 may have above-described functions of the base station apparatus 10. In this regard, a word such as "up" or "down" may be replaced with a word corresponding to communication between terminals (for example, "side"). For example, an uplink channel, a downlink channel, or the like may be replaced with a side channel.

Similarly, a user terminal according to the present disclosure may be read as a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above-described apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of numerology.

The numerology may be a communication parameter that is applied to at least one of transmission and reception of a signal or a channel. The numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in a frequency domain, a specific windowing processing performed by a transceiver in a time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on the numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit for transmitting a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to assign, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, a normal TTI, a subframe, and the like) may be read as TTI having a time length exceeding 1 ms, and a short TTI (for example, a shortened TTI) may be read as a TTI having a TTI length less than the TTI length of the long TTI and equal to or more than 1 ms.

A resource block (RB) is a resource assignment unit in terms of a time domain and a frequency domain and may include one or a plurality of consecutive subcarriers in terms of frequency domain. The number of subcarriers included in an RB may be the same regardless of the numerology, and, for example, may be 12. The number of subcarriers included in a RB may be determined based on the numerology.

Also, in terms of the time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

Also, a resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for certain numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of configured BWPs may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following the article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information) .

In the present disclosure, MsgA or Msg1 is one example of the first message. MsgB or Msg2 is one example of the second message. The RO is one example of the random access occasion. The PUSCH is one example pf a physical uplink shared channel.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### LIST OF REFERENCE SYMBOLS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Storage device
- 1003: Auxiliary storage device
- 1004: Communication device
- 1005: Input device
- 1006: Output device

## Claims

1. A terminal (20), comprising:
a transmission unit (210) configured to transmit a first message to a base station (10), the first message including a random access preamble for a two-step random access procedure or for a four-step random access procedure;
a reception unit (220) configured to receive a second message as a response to the first message, from the base station; and
a control unit (240) configured to, if radio quality in communication with the base station satisfies a condition, perform the two-step random access procedure, and, if the radio quality in communication with the base station does not satisfy the condition, perform the four-step random access procedure;
**characterized in that**, when performing the two-step random access procedure, the control unit is configured to select a random access preamble group based on a size of the first message and a pathloss to which an offset to the target reception power configured for the two-step random access procedure is applied.

2. A communication system comprising a terminal (20) according to claim 1 and a base station (20), wherein the base station (10) includes:
a reception unit (120) configured to receive the first message from the terminal; and
a transmission unit (110) configured to transmit the second message.

3. A communication method implemented by a terminal (20), comprising:
a transmission procedure of transmitting a first message to a base station, the first message including a random access preamble for a two-step random access procedure or for a four-step random access procedure;
a reception procedure of receiving a second message as a response to the first message, from the base station; and
a control procedure of, if radio quality in communication with the base station satisfies a condition, performing the two-step random access procedure, and, if the radio quality in communication with the base station does not satisfy the condition, performing the four-step random access procedure;
**characterized in that**, when performing the two-step random access procedure, the control procedure selects a random access preamble group based on a size of the first message and a pathloss to which an offset to the target reception power configured for the two-step random access procedure is applied.

## Patentansprüche

1. Endgerät (20), umfassend:
eine Übertragungseinheit (210), die so konfiguriert ist, dass sie eine erste Nachricht an eine Basisstation (10) überträgt, wobei die erste Nachricht eine Direktzugriffspräambel für ein zweistufiges Direktzugriffsverfahren oder für ein vierstufiges Direktzugriffsverfahren einschließt;
eine Empfangseinheit (220), die so konfiguriert ist, dass sie von der Basisstation als Antwort auf die erste Nachricht eine zweite Nachricht empfängt; und
eine Empfangseinheit (240), die so konfiguriert ist, dass sie, wenn die Empfangseinheit in Kommunikation mit der Basisstation eine Bedingung erfüllt, das zweistufige Direktzugriffsverfahren durchführt, und wenn die Empfangseinheit in Kommunikation mit der Basisstation die Bedingung nicht erfüllt, das vierstufige Direktzugriffsverfahren durchführt;
**dadurch gekennzeichnet, dass** beim Durchführen des zweistufigen Direktzugriffsverfahrens die Empfangseinheit so konfiguriert ist, dass sie eine Direktzugriffspräambelgruppe basierend auf einer Größe der ersten Nachricht und eines Pfadverlusts, dem ein Versatz der für das zweistufige Direktzugriffsverfahren konfigurierten Zielempfangsleistung angewendet ist, auswählt.

2. Kommunikationssystem, umfassend ein Endgerät (20) nach Anspruch 1 und eine Basisstation (20), wobei die Basisstation (10) Folgendes einschließt:
eine Empfangseinheit (120), die so konfiguriert ist, dass sie die erste Nachricht von dem Endgerät empfängt; und
eine Übertragungseinheit (110), die so konfiguriert ist, dass die zweite Nachricht überträgt.

3. Kommunikationsverfahren, implementiert durch ein Endgerät (20), umfassend:
ein Übertragungsverfahren zum Übertragen einer ersten Nachricht an eine Basisstation, wobei die erste Nachricht eine Direktzugriffspräambel für ein zweistufiges Direktzugriffsverfahren oder für ein vierstufiges Direktzugriffsverfahren einschließt;
ein Empfangsverfahren zum Empfangen einer zweiten Nachricht von der Basisstation als Antwort auf die erste Nachricht; und
ein Steuerverfahren des Durchführens, wenn die Funkqualität in Kommunikation mit der Basisstation eine Bedingung erfüllt, des zweistufigen Direktzugriffsverfahrens, und wenn die Funkqualität in Kommunikation mit der Basisstation die Bedingung nicht erfüllt, des vierstufigen Direktzugriffsverfahrens;
**dadurch gekennzeichnet, dass** beim Durchführen des zweistufigen Direktzugriffsverfahrens die Steuerung eine Direktzugriffspräambelgruppe basierend auf einer Größe der ersten Nachricht und eines Pfadverlusts, dem ein Versatz der für das zweistufige Direktzugriffsverfahren konfigurierten Zielempfangsleistung angewendet ist, auswählt.

## Revendications

1. Terminal (20), comprenant :
une unité de transmission (210), conçue pour transmettre un premier message à une station de base (10), le premier message incluant un préambule d'accès aléatoire d'une procédure d'accès aléatoire en deux étapes ou d'une procédure d'accès aléatoire en quatre étapes ;
une unité de réception (220), conçue pour recevoir, en provenance de la station de base, un second message en réponse au premier message ; et
une unité de commande (240), conçue pour exécuter la procédure d'accès aléatoire en deux étapes lorsque la qualité radio de communication avec la station de base satisfait à une première condition, ou à exécuter la procédure d'accès aléatoire à quatre étapes lorsque la qualité radio de communication avec la station de base ne satisfait pas à la première condition ;
**caractérisée en ce que**, lors de la mise en œuvre de la procédure d'accès aléatoire en deux étapes, l'unité de commande est conçue pour sélectionner un groupe de préambules d'accès aléatoire sur la base d'une taille du premier message et d'une perte sur le trajet à laquelle est appliqué un décalage par rapport à la puissance de réception cible configurée pour la procédure d'accès aléatoire en deux étapes.

2. Système de communication comprenant un terminal (20) selon la revendication 1 et une station de base (20), dans lequel la station de base (10) inclut :
une unité de réception (120) conçue pour recevoir le premier message en provenance du terminal ; et
une unité de transmission (110) conçue pour transmettre le second message.

3. Procédé de communication mis en œuvre par un terminal (20), comprenant :
une procédure de transmission consistant à transmettre un premier message à une station de base, le premier message incluant un préambule d'accès aléatoire pour une procédure d'accès aléatoire en deux étapes ou pour une procédure d'accès aléatoire en quatre étapes ;
une procédure de réception d'un second message en réponse au premier message, en provenance de la station de base ; et
une procédure de commande destinée à exécuter la procédure d'accès aléatoire en deux étapes lorsque la qualité radio de communication avec la station de base satisfait à une condition, et à exécuter la procédure d'accès aléatoire à quatre étapes lorsque la qualité radio de communication avec la station de base ne satisfait pas à la condition ;
**caractérisée en ce que**, lors de la mise en œuvre de la procédure d'accès aléatoire en deux étapes, la procédure de commande sélectionne un groupe de préambules d'accès aléatoire sur la base d'une taille du premier message et d'une perte sur le trajet à laquelle est appliqué un décalage par rapport à la puissance de réception cible configurée pour la procédure d'accès aléatoire en deux étapes.
